# NEUE EUROPÄISCHE PATENTSCHRIFT

(11) **EP 2 388 126 B2**
(45) Veröffentlichungstag und Bekanntmachung des Hinweises auf die Entscheidung über den Einspruch: **10.12.2025**
(45) Hinweis auf die Patenterteilung: 21.08.2019
(21) Anmeldenummer: 11166831.5
(22) Anmeldetag: 20.05.2011
(51) Int. Cl.: B29C 49/42, B29C 49/46

(54) **Blasmaschine mit Zuleitungssterilisation**
Blowing machine with supply sterilisation
Souffleuse dotée d'une stérilisation d'alimentation

(30) Priorität: 20.05.2010 DE 102010022132
(43) Veröffentlichungstag der Anmeldung: 23.11.2011
(60) Teilanmeldung: 19189043.3
(73) Patentinhaber: Krones AG, 93073 Neutraubling (DE)
(72) Erfinder: Martini, Oliver, 93073 Neutraubling (DE); Söllner, Jürgen, 93073 Neutraubling (DE); Dahmen, Michael, 93073 Neutraubling (DE); Hausladen, Josef, 93073 Neutraubling (DE); Lappe, Ulrich, 93073 Neutraubling (DE); Voth, Klaus, 93073 Neutraubling (DE)
(74) Vertreter: Bittner, Bernhard

(56) Entgegenhaltungen:
- EP-A1- 2 143 545
- EP-A1- 2 255 949
- EP-A2- 2 283 991
- WO-A1-2009/075791
- WO-A1-2010/003873
- DE-A1- 102006 053 193
- DE-A1- 19 520 925
- FR-A- 1 430 316
- JP-A- 2000 167 915
- US-A- 3 650 678
- US-A- 4 208 852
- US-A1- 2008 152 538
- US-B1- 6 214 282

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind in Form von Blasmaschinen seit langem im Stand der Technik bekannt. Dabei werden Kunststoffvorformlinge auf eine Verformungstemperatur aufgeheizt und mittels Druckluft zu Kunststoffbehältnissen umgeformt. Die dazu nötige Druckluft wird dabei beispielsweise über einen Ringkanal einer Vielzahl von Blasstationen zugeführt.

Aus dem Stand der Technik ist es auch bekannt, aseptische Umformungsprozesse durchzuführen. Dabei werden Behältnisse, Verschlüsse und Oberflächen z.B. mittels gasförmigen Wasserstoffperoxids (H₂O₂) temporär oder kontinuierlich sterilisiert. Anschließend kann beispielsweise bei kaltaseptischen Abfüllanlagen ein steriles Produkt in vorher sterilisierte Behältnisse abgefüllt und die Behältnisse mit einem sterilisierten Verschluss verschlossen werden. Die Sterilisation der Verpackungsmaterialien und die Abfüllung des Produkts finden dabei meist in einer Maschineneinheit statt. Der gesamte Raum, in dem die Sterilisation ggfs. auch die Abfüllung stattfindet, wird als Isolator oder Reinraum bezeichnet. Während der Packstoff im Produktionszyklus kontinuierlich sterilisiert wird, muss dieser Isolator bzw. Reinraum zu Beginn der Produktion ebenfalls sterilisiert werden. Bisher wurde eine Oberflächenentkeimung im Isolator durch flüssige Agenzien vorgenommen, bevorzugt wurde dabei eine Peressigsäurelösung eingesetzt.

Diese wurde in definierter Konzentration aufgetragen und für eine bestimmte Zeit (auch als Kontaktzeit bezeichnet) einwirken gelassen. Anschließend wird die Lösung mit sterilem Wasser abgespült.

US3650678 offenbart eine Vorrichtung und ein Verfahren zum Umformen von Kunststoffvorformlingen zu Kunststoffbehältnissen mit einer Ventileinrichtung, die Zufuhr des fließfähigen Mediums in die Behältnisse steuert, um die Behältnisse zu expandieren, wobei es sich bei der Vorrichtung um eine Streckblasmaschine mit einer Reckstange zum Dehnen der Behältnissen in ihrer Längsrichtung handelt.

Ausgehend von diesem Stand der Technik liegt der vorliegenden Erfindung die Aufgabe zugrunde, den Sterilisations- oder Reinheitsgrad der Maschinen weiter zu erhöhen. Dies wird erfindungsgemäß durch eine Vorrichtung nach Anspruch 1, eine Vorrichtung nach Anspruch 2 und ein Verfahren nach Anspruch 10 erreicht. Vorteilhafte Ausführungsformen und Weiterbildungen sind Gegenstand der Unteransprüche.

Eine Vorrichtung zum Umformen von Kunststoffvorformlingen zu Kunststoffbehältnissen weist eine Transporteinrichtung auf, welche die Behältnisse entlang eines vorgegebenen Transportpfades transportiert. Weiterhin weist die Vorrichtung eine Beaufschlagungseinrichtung auf, welche die Behältnisse mit einem fließfähigen Medium beaufschlagt, um diese zu expandieren. Daneben ist auch ein Reservoir zum Aufbewahren des fließfähigen Mediums vorgesehen, sowie eine Zuführungsleitung, welche das fließfähige Medium von dem Reservoir zu dem Behältnis fördert. Dabei steuert diese Ventileinrichtung die Zufuhr des fließfähigen Mediums in die Behältnisse.

Die Vorrichtung weist eine erste Zuleitung auf, um der Zuführungsleitung (zwischen dem Reservoir und dem zu behandelnden Behältnis) oder einer Abführleitung für das fließfähige Medium, welche das fließfähige Medium von den Behältnissen abführt, ein fließfähiges Sterilisationsmedium zuzuführen.

Unter einer Ventileinrichtung werden im Zusammenhang mit der vorliegenden Beschreibung nicht nur solche Einrichtungen verstanden, welche eine Medienzufuhr nur zulassen oder vollständig unterbinden, sondern auch solche Einrichtungen, welche eine Regelung eines Medienstromes erlauben wie beispielsweise Druckregler, Druckminderer und dergleichen. Damit handelt es sich bei der Ventileinrichtung im weiteren Sinne um eine Zufuhrsteuereinrichtung, welche die Zufuhr des gasförmigen Mediums an die Behältnisse steuert. Im folgenden wird neben dem Begriff Ventileinrichtung auch der Begriff Druckminderer verwendet.

Im Rahmen der Entwicklungsarbeit der Anmelderin wurde erkannt, dass es auch hilfreich ist, die Innenoberflächen von Rohrleitungssystemen bzw. auch in Rohrleitungssystemen befindliche Filter und/oder Behälter zu sterilisieren. Entsprechend wäre es auch möglich, die Zuleitung in eine Abführleitung zu führen, welche das fließfähige Medium von den Blasstationen (etwa zum Zweck des Luftrecyclings) abführt. In diesem Fall wird das Sterilisationsmedium in der entgegengesetzten Richtung wie das fließfähige Medium im Arbeitsbetrieb durch die Vorrichtung gefördert. Vorteilhaft werden jedoch das fließfähige Medium und das Sterilisationsmedium in der gleichen Förderrichtung durch die Vorrichtung gefördert.

Vorzugsweise weist die Vorrichtung einen Reinraum auf, innerhalb dessen die Behältnisse transportiert werden. Dabei kann beispielsweise eine Vorrichtung vorgesehen sein, wie sie in der WO 2010/020 529 A2 beschrieben wurde. Der Gegenstand dieser Offenbarung wird hiermit durch Bezugnahme voll umfänglich zum Gegenstand auch der vorliegenden Offenbarung gemacht.

Bei der Beaufschlagungseinrichtung handelt es sich insbesondere um eine Blasdüse, die ggfs. gemeinsam mit einem Blaskolben ausgeführt ist, und die auf die Mündungen der Behältnisse oder auch auf die Blasform aufgesetzt wird, um die Behältnisse mit Druckluft zu beaufschlagen. Damit handelt es sich bei dem fließfähigen Medium insbesondere um ein Gas und besonders bevorzugt um Druckluft. Die Beaufschlagungseinrichtung ist vorteilhaft beweglich gegenüber dem Behältnis.

Unter einem Reservoir zum Aufbewahren des fließfähigen Mediums wird jegliche Einrichtung verstanden, welche das Medium zur Verfügung stellen kann, wie beispielsweise ein Behälter, ein Ringkanal oder auch ein Kompressor, der in der Lage ist, die Luft unter einem vorgegebenen Druck zur Verfügung zu stellen.

Es wird vorgeschlagen, dass die Zuführleitung bzw. die Zuführleitungen sterilisiert werden. Vorteilhaft handelt es sich bei dem Sterilisationsmedium um ein gasförmiges Sterilisationsmedium. So könnte beispielsweise Wasserstoffperoxid (H₂O₂) eingesetzt werden, um die besagten Leitungen zu sterilisieren. Vorteilhaft ist das Reservoir stationär angeordnet. Mit anderen Worten wird das Behältnis, und bevorzugt auch die Ventileinrichtung, beweglich gegenüber dem Reservoir geführt. So kann beispielsweise die Vorrichtung ein Blasrad aufweisen, an dem eine Vielzahl von Blasstationen angeordnet ist, die hier entlang einer kreisförmigen Bahn transportiert werden.

Vorteilhaft weist die Vorrichtung eine Vielzahl von Blasformen auf, in denen die Kunststoffvorformlinge durch Beaufschlagung mit dem fließfähigen Medium zu Kunststoffbehältnissen formbar sind.

Bei einer weiteren vorteilhaften Ausführungsform kann die Vorrichtung einen Sterilluftfilter aufweisen, der vorteilhaft in der besagten Zuführleitung angeordnet ist. Bei einer Ausführungsform gemäß einer ersten erfindungsgemäßen Alternative oder bei einer weiteren vorteilhaften Ausführungsform gemäß einer zweiten erfindungsgemäßen Alternative weist die Vorrichtung eine Steuereinrichtung auf, welche das Zuführen des Sterilisationsmediums nur außerhalb eines Arbeitsbetriebs der Vorrichtung, in welchem die Behältnisse mit flüssigen Medien beaufschlagt werden, zulässt. In dieser Ausführungsform wird sichergestellt, dass eine Sterilisation nicht während eines Arbeitsbetriebs der Vorrichtung erfolgt, sondern beispielsweise vor dem Arbeitsbetrieb oder auch in Betriebspausen und dergleichen.

Bei einer Ausführungsform gemäß der zweiten erfindungsgemäßen Alternative oder einer bevorzugten Ausführungsform der ersten erfindungsgemäßen Alternative weist die Vorrichtung eine Vielzahl von Beaufschlagungseinrichtungen bzw. Blasdüsen auf. Die Vorrichtung weist gemäß der zweiten erfindungsgemäßen Alternative oder gemäß einer bevorzugten Ausführungsform der ersten erfindungsgemäßen Alternative ferner eine Verteileinrichtung auf, welche das fließfähige Medium an die einzelnen Beaufschlagungseinrichtungen leitet, wobei die Zuleitung bevorzugt zwischen dem Reservoir und der Verteileinrichtung in die Zuführleitung mündet. Vorteilhaft transportiert die Verteileinrichtung das fließfähige Medium von stationären Elementen der Vorrichtung zu beweglichen Elementen der Vorrichtung.

Bei der Verteileinrichtung kann es sich beispielsweise um einen sogenannten Drehverteiler handeln, der die Druckluft auf einzelne Ringkanäle verteilt, wobei diese Ringkanäle dann bevorzugt mit den Blasstationen drehbar sind. Vorteilhaft sind mehrere derartige Ringkanäle vorgesehen, die zur Versorgung der einzelnen Blasstationen bei unterschiedlichen Druckstufen dienen.

Vorteilhaft weist die Vorrichtung eine zweite Zuleitung für ein weiteres Sterilisationsmedium auf. Auf diese Weise kann die Vorrichtung mit mehreren Sterilisationsmedien beaufschlagt werden.

So ist es beispielsweise möglich, dass an einem zentralen Einspeisepunkt zu einem bestimmten Zeitpunkt im Produktionszyklus, beispielsweise bei der Produktionsvorbereitung an bestimmten Einspeisepunkten das gasförmige Sterilisationsagens zugegeben wird.

Einspeisepunkte in das System könnten unter Umständen Zuleitungen zur Druckluftversorgung der Blasmaschine sein. Eingesetzt wird das Verfahren bevorzugt zu einem Zeitpunkt, in denen kein Behältnis geblasen wird.

Vorteilhaft ist diese Anwendung insbesondere dann, wenn eine Sterilisationsgasaufbereitung an dem entsprechenden Anlagentyp vorgesehen ist. Insbesondere bei Rohrleitungssystemen oder Behältern, die vor Produktionsbeginn sterilisiert oder während laufender Produktion resterilisiert werden müssen, jedoch nur bedingt temperaturbeständig sind, ist dieses Verfahren bzw. diese Vorrichtung bevorzugt anzuwenden. So kann das Verfahren wie oben erwähnt beispielsweise in einem Mediendrehverteiler in einer Blasmaschine Anwendung finden.

Bei einer weiteren vorteilhaften Ausführungsform erfolgt die Zuleitung des Sterilisationsmediums in die Zuführleitung in einem Bereich der Zuführleitung, der stromabwärts der Ventileinrichtungen gelegen ist. Auf diese Weise wird erreicht, dass die Ventileinrichtungen bzw. Druckregeleinrichtungen selbst auch während des Sterilisationsvorgangs nicht von dem Sterilisationsmedium durchflossen werden. Auch könnten die Ventileinrichtung zwischen einem Zuführungspunkt für ein erstes Sterilisationsmedium und einem Zuführungspunkt für ein zweites Sterilisationsmedium angeordnet sein.

Die vorliegende Erfindung ist weiterhin auf ein Verfahren gemäß Anspruch 10 zum Betreiben einer Vorrichtung zum Umformen von Kunststoffvorformlingen zu Kunststoffbehältnissen gerichtet, wobei die Vorrichtung in einem Arbeitsbetrieb mittels einer Vielzahl von Beaufschlagungseinrichtungen Behältnisse mit einem flüssigen Medium beaufschlagt und dieses fließfähige Medium den Behältnissen über eine Zuführleitung zugeführt wird.

Der Zuführungsleitung wird wenigstens zeitweise ein gasförmiges Sterilisationsmedium zum Sterilisieren der Zuführungsleitung zugeführt. Dieses Sterilisationsmedium kann dabei direkt der Zuführungsleitung zugeführt werden oder auch in andere Bereiche der Vorrichtung eingeführt werden, um von dort in die Zuführeinrichtung bzw. Zuführleitung zu gelangen. So könnte das Sterilisationsmedium auch über die Blasdüse zugeführt werden.

Damit wird auch verfahrensseitig vorgeschlagen, eine Sterilisation der Zuführungsleitungen vorzunehmen. Vorzugsweise wird der Zuführungsleitung das Sterilisationsmedium in einem Reinigungsmodus der Anlage zugeführt.

So könnte zunächst bei einem bevorzugten Verfahren über einen insbesondere zentralen Einspeisepunkt zunächst Luft, bevorzugt erwärmte Druckluft ausgegeben werden, um verbleibende Flüssigkeit, welche sich möglicherweise im System befindet und den Entkeimungserfolg verzögert, zu entfernen und/oder das System zu konditionieren. Vorteilhaft kann dieser Prozess mittels Temperaturfühlern oder Feuchtigkeitssensoren überwacht werden.

Nach einer bestimmten Trocknungs- oder Konditionierzeit kann - bevorzugt am gleichen Einspeisepunkt - das gasförmige Sterilisationsagens zugegeben werden. Eine Kondensation des Sterilisationsgases ist durch Auswahl geeigneter Prozessparameter zu verhindern. Das Sterilisationsgas kann während des Sterilisationszyklus beispielsweise über eine Düsenanordnung in einen Reinraum mit mindestens einer Absaugstelle geführt werden.

Vorteilhaft wird dieser Reinraum gleichzeitig durch das Medium bzw. durch das gleiche Medium über eine weitere Zuführung sterilisiert. Diese Zuführung ist beispielsweise ein weiteres Rohrleitungssystem, welches vorteilhaft eine Filtrationseinrichtung aufweist.

Vorteilhaft enthält das Sterilisationsmedium Wasserstoffsuperoxid. Gemäß einer Ausführungsform gemäß der ersten erfindungsgemäßen Alternative wird, wie oben erwähnt, die Sterilisation außerhalb eines Arbeitsbetriebs der Vorrichtung vorgenommen.

Bei einem weiteren vorteilhaften Verfahren wird der Vorrichtung und insbesondere der Zuführleitung nach dem Sterilisieren ein weiteres Medium zugeführt. Bei diesem weiteren Medium handelt es sich insbesondere um ein steriles Gas und besonders bevorzugt um Sterilluft. Auf diese Weise können die jeweiligen Zuführungsleitungen wieder von dem Sterilisationsgas freigespült werden. *Die* Sterilluft kann über spezielle Sterilfiltrationseinrichtungen aufbereitet werden. Diese werden bevorzugt mit Dampf oder einem gasförmigen Sterilisationsagenz vor der Benutzung sterilisiert.

Bei einem weiteren vorteilhaften Verfahren wird, wie oben erwähnt, der Vorrichtung vor dem Sterilisieren Druckluft zugeführt.

Darin zeigen:
- Fig. 1a: eine schematische Darstellung der Medienverläufe im Stand der Technik;
- Fig. 1b: eine weitere Darstellung der Medienverläufe im Stand der Technik;
- Fig. 2: eine Darstellung der Medienverläufe bei einer erfindungsgemäßen Vorrichtung;
- Fig. 3: eine weitere Ausführungsform der erfindungsgemäßen Vorrichtung;
- Fig. 4: eine weitere Ausführungsform der erfindungsgemäßen Vorrichtung; und
- Fig. 5: eine weitere Ausführungsform der erfindungsgemäßen Vorrichtung.

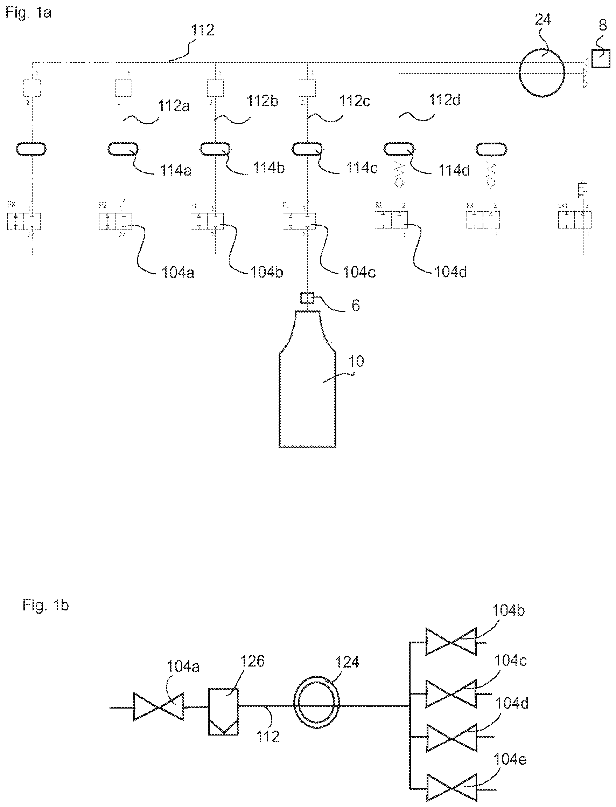

Fig. 1a zeigt eine Darstellung der einzelnen Medienverläufe im Stand der Technik. Dabei wird von einem Reservoir 8, wie beispielsweise einem Kompressor, das gasförmige Medium, beispielsweise Druckluft zur Verfügung gestellt. Anschließend wird das Medium über einen Verteiler, wie beispielsweise einem Drehverteiler 24 über einen Hauptkanal 112 auf eine Vielzahl von Teilkanälen 112a bis 112c verteilt. Von diesen Teilkanälen 112a bis 112c gelangt das Medium jeweils in Ringkanäle 114a bis 114c. Auch diese Ringkanäle stellen dabei Bestandteil der Zuführleitung für die Druckluft dar.

Über Ventile 104a bis 104c wird die Zufuhr der Druckluft über eine Blasdüse 6 in das Behältnis 10 gesteuert. Daneben könnten auch wie in Fig. 1 dargestellt, weitere Ringkanäle, sowie Seitenarme für die Druckluftzuführung vorhanden sein. Bei der Leitung 112d handelt es sich um eine Rückleitung, über welche Druckluft wieder über die Verteileinrichtung 24 in das Reservoir rückgeführt werden kann. Diese Rückführung dient dabei der Energieeinsparung, da beispielsweise Druckluft recycelt werden kann. Von jedem der Ringkanäle wird dabei bevorzugt eine Vielzahl von Blasstationen versorgt.

Fig. 1b zeigt eine weitere Darstellung einer Vorrichtung nach dem Stand der Technik. Hier ist ein Druckminderer (oder Druckregeleinrichtung) 104a in der Hauptleitung 112 vorgesehen, sowie vier weitere Druckminderer 104b bis 104e, die in den einzelnen Seitenkanälen angeordnet sind. Das Bezugszeichen 126 bezieht sich auf eine Filtereinrichtung zum Filtern der Druckluft.

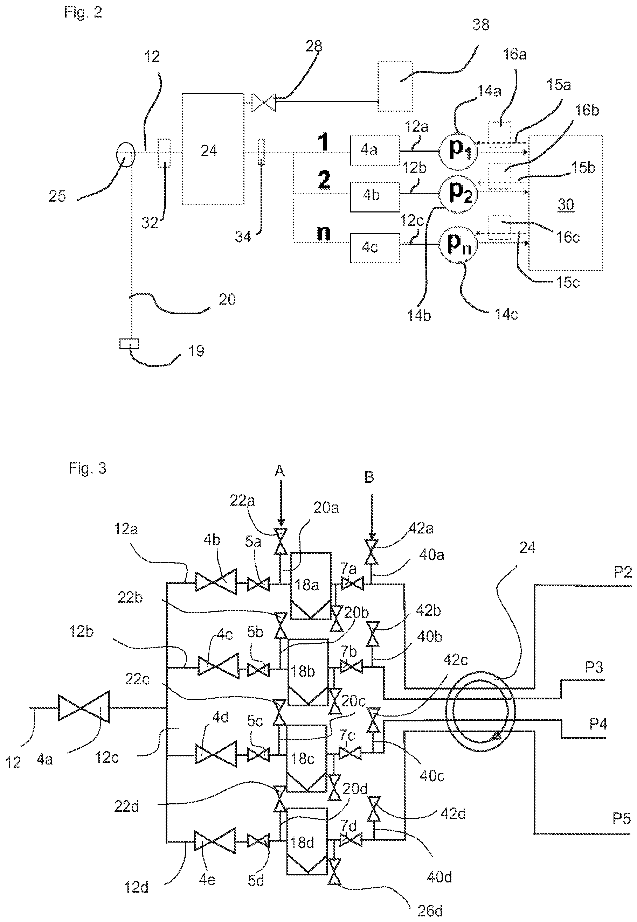

Fig. 2 zeigt eine Darstellung einer erfindungsgemäßen Vorrichtung. Auch hier ist eine Zuführleitung 12 vorgesehen, welche in Seitenleitungen 12a bis 12c, sowie Ringkanäle 14a bis 14c, die jedoch ebenfalls Bestandteil der Zuführleitung 12 sind, münden. Die Druckluft aus diesen einzelnen Ringkanälen 14 bis 14c wird letztlich einer Blasstation 30 bzw. einer Blasdüse zugeführt. Daneben können auch Rückführungsleitungen 15a bis 15c vorhanden sein. Die einzelnen Kanäle 14a bis 14d dienen dabei der zur Verfügungstellung von unterschiedlichen Druckniveaus. Die Bezugszeichen 4a bis 4c beziehen sich auf Druckminderer, welche in den jeweiligen Teilkanälen 14a bis 14c eingebaut sein können. Diese Druckminderer stellen hier die eingangs erwähnten Ventileinrichtungen dar, welche die Zufuhr des gasförmigen Mediums in die Behältnisse steuern. Weiterhin ist eine Verteileinrichtung bzw. ein Drehverteiler 24 vorgesehen, der die Luft von dem stationär angeordneten Reservoir auf die drehenden Blasstationen aufteilt. Ein erster Filter 32 ist vor dieser Verteileinrichtung 24 angeordnet und ein zweiter Filter 34 nach der Verteileinrichtung. Daneben kann noch ein Luftverbraucher 38 vorgesehen sein, der hier keinen direkten Kontakt mit dem Produkt oder verpackten Material aufweist, sowie eine Absperrvorrichtung wie ein Ventil 28, welches die Zuführung der Druckluft in diesen Luftverbraucher 38 steuert. Das Bezugszeichen 19 kennzeichnet ein Reservoir für das Sterilisationsmedium.

Es wird nunmehr vorgeschlagen, über eine Zuleitung 20 und einen zentralen Einspeisepunkt insbesondere in einem Sterilisationsbetrieb ein Sterilisationsmittel und bevorzugt ein gasförmiges Sterilisationsmittel zuzuführen, um auf diese Weise die Zuführleitung 12 bzw. die einzelnen Teilleitungen 12a bis 12c und/oder die Ringkanäle 14a bis 14c zu sterilisieren bzw. zu reinigen. Die Bezugszeichen 16a bis 16c beziehen sich auf Filtereinheiten zum Behandeln der Abluft aus den einzelnen Blasstationen.

Vorzugsweise handelt es sich bei der offenbarten Blasmaschine um eine steril betriebene Blasmaschine, d. h. die einzelnen Blasstationen 30 werden vorteilhaft durch einen Sterilraum transportiert und die Behältnisse werden insbesondere innerhalb dieses Sterilraums erzeugt. Daneben kann vor der Blasmaschine eine Heizeinrichtung zum Erwärmen der Kunststoffvorformlinge vorgesehen sein. Auch in dieser Heizeinrichtung können die Behältnisse durch einen Sterilraum transportiert werden.

In diesem Zusammenhang wurde seitens der Anmelderin auch die Notwendigkeit erkannt, die Leitungen und Wege der Hochdruckluft, die zum Blasen der Behältnisse verwendet wird, regelmäßig zu sterilisieren und steril zu halten. Daneben wird vorteilhaft auch die Sterilität der Hochdruckluft selbst z. B. über Filtration sichergestellt.

Vorteilhaft wird zur Weiterentwicklung der Vorformlingsterilisation die Sterilität der Vorformlinge bzw. Flaschen auch während des Streckblasprozesses aufrechterhalten. Erfindungsgemäß handelt es sich bei der Vorrichtung um eine sogenannte Streckblasmaschine, welche auch eine Reckstange aufweist, welche die Behältnisse in ihrer Längsrichtung dehnt.

Die vorliegende Erfindung eignet sich daher insbesondere für Anlagen, welche Behältnisse aseptisch abfüllen, wobei die Kunststoffvorformlinge nach einer vorhergehenden Sterilisation und einer sterilen Umformung der Kunststoffvorformlinge durch einen Streckblasprozess oder durch vergleichbare Prozesse aseptisch abgefüllt werden. Daneben wäre es auch möglich, dem Blasprozess bereits sterile Kunststoffvorformlinge auch ohne vorhergehende Sterilisation zuzuführen.

Es wird daher auch durch die erfindungsgemäße Vorrichtung und das erfindungsgemäße Verfahren erreicht, dass im Arbeitsbetrieb das Medium Hochdruckluft zum Umformen der sterilen Kunststoffvorformlinge steril bereit gestellt wird, um so eine mikrobiologische Rekontamination während des Streckblasprozesses zu vermeiden.

Unter Bezugnahme auf Fig. 2 werden auch die Filtereinrichtungen 32 und 34 regelmäßig sterilisiert. Vorteilhaft wird jedoch die hier beschriebene Sterilisation außerhalb eines Arbeitsbetriebs der Anlage vorgenommen. Diese Sterilisation der Filter bzw. Sterilluftfilter kann beispielsweise mittels Dampf oder chemischen Sterilisationsmedien wie beispielsweise gasförmigem Wasserstoffperoxid, flüssiger Peressigsäure oder auch anderer oxidierender Medien vorgenommen werden.

Weiterhin werden auch, wie eingangs erwähnt, die druckluftführenden Wege, d. h. hier insbesondere die Zuführleitungen 12, sowie 12a bis 12d regelmäßig sterilisiert. Idealerweise erfolgt auch hier die Sterilisation mittels gasförmigem Wasserstoffperoxid welches über die Zuleitung 20 zugeführt wird. Andere Sterilisationsmedien, wie Dampf, flüssige Peressigsäure oder andere oxidierende Medien sind ebenfalls denkbar. Vorteilhaft werden die einzelnen Druckluftwege derart ausgeführt, dass eine ausreichende Sterilisation sichergestellt und eine Rekontamination während des bestimmungsgemäßen Betriebs ausgeschlossen wird.

Wie sich auch aus Fig. 2 ergibt, werden bei modernen Blasstreckprozessen verschiedene Druckniveaus zu einer effizienten Herstellung der Kunststoffflaschen benötigt. Nach dem heutigen Stand der Technik wird dabei die dazu benötigte Druckluft auf einem vorgegebenen Druckniveau über eine Verteileinrichtung wie den Drehverteiler 24 zu dem drehenden Teil der Blasmaschine mit den Blasstationen 30 zugeführt und erst nach dem Drehverteiler 24 mittels Druckminderern 4a bis 4c der Druck auf die verschiedenen Druckniveaus reduziert. Da auch diese Druckminderer 4a bis 4c keine hygienischen bzw. aseptischen Bauteile im eigentlichen Sinne sind, wird hier vorgeschlagen, die benötigten verschiedenen Druckniveaus unter sterilen Bedingungen bereitzustellen.

In den Figuren nicht dargestellt ist eine Transporteinrichtung, welche die Blasstationen bzw. die Behältnisse 10 transportiert. Dabei ist es möglich, dass, wie an sich im Stand der Technik bekannt, die einzelnen Blasstaionen an einem Blasrad angeordnet sind und entsprechend entlang einer kreisförmigen Bahn transportiert werden. Weiterhin werden die Behältnisse bevorzugt, wie erwähnt innerhalb eines Reinraums bzw. Sterilsraums während des Expansionsvorgangs transportiert

Fig. 3 zeigt eine weitere Ausführungsform der vorliegenden Erfindung. Hier sind die einzelnen Druckminderer bzw. Druckregler (welche auch wieder die eingangs erwähnten Ventileinrichtungen darstellen) 4a bis 4e vor der Verteileinrichtung 24 angeordnet und auch die einzelnen Filtereinrichtungen 18a bis 18d. Die Zuleitungen 20a bis 20e für das Sterilisationsmedium A befinden sich hier nach den Druckminderern bzw. Druckreglern 4a bis 4e, jedoch vor den Filtereinrichtungen. Die Bezugszeichen 22a bis 22d kennzeichnen Ventileinrichtungen, welche die Zufuhr des Sterilmediums A steuern.

Die Bezugszeichen 5a - 5d beziehen sich auf Ventile, welche den Druckminderern 4b - 4e nachgeschaltet sind. Diese Ventile könnten den Druckminderern jedoch auch vorangestellt sein..Die Bezugszeichen 7a - 7d beziehen sich auf weitere Ventile, welche hier den Filtereinrichtungen 18a - 18d nachgeschaltet sind.

Damit werden hier die unterschiedlichen Druckniveaus vor dem Drehverteiler 24 hergestellt und nach erfolgter Sterilfiltration der Druckluft jedes einzelnen Druckniveaus über mehrere Spuren in dem Drehverteiler 24 den einzelnen Blasstationen (nicht gezeigt), zugeführt. Die Bezugszeichen 22a bis 22e beziehen sich auf Ventile, über welche die Zufuhr des Sterilisationsmediums in die einzelnen Zuführleitungen 12a bis 12d gesteuert werden kann.

Die Bezugszeichen 40a bis 40d auf weitere Zuleitungen, mit denen ein zweites Sterilisationsmedium B in Zuführleitungen 12a bis 12d zugeführt werden kann. Entsprechend kennzeichnen auch hier die Bezugszeichen 42a bis 42d wiederum Ventile, welche die Zufuhr des Sterilmediums B in die Anlage steuern. Über Ventile 26a bis 26d (zur besseren Übersichtlichgkeit ist nur das Ventil 26d gekennzeichnet) kann das Sterilisationsmedium A abgeführt werden, falls dieses lediglich zur Sterilisation der Filter 18a - 18d dient.

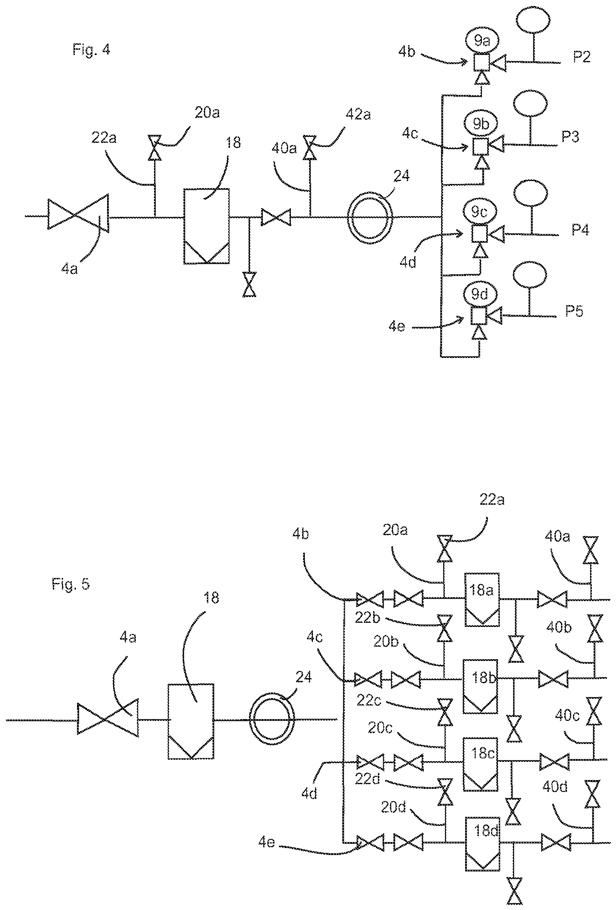

Fig. 4 zeigt eine weitere Ausgestaltung in einer erfindungsgemäßen Vorrichtung. Auch hier ist eine Ventileinrichtung 4a vorangestellt und über eine Zuleitung 20a und ein Ventil 22a wird ein erstes Sterilmedium A zugeführt. Dieses erste Sterilmedium dient dabei auch der Sterilisation der Filtereinrichtung 18. Weiterhin ist auch die zweite Zuleitung 40a vorhanden und im Anschluss daran die Verteileinrichtung 24, welche hier einkanalig ausgeführt ist.

Im Anschluss an die Verteileinrichtung sind einzelne Regelventile 4b bis 4e vorgesehen, welche den Druck der einzelnen Druckstufen P2 bis P5 steuern. Diese Regelventile nehmen hier die Funktion der eingangs erwähnten Ventileinrichtungen dar Der Druck wird dabei über eine Messeinrichtung 9a -9d überwacht und reguliert. Damit wird auch hier die sterile Druckluft auf einem Druckniveau auf den drehenden Teil der Maschine zur Verfügung gestellt. Dabei können beispielsweise hygienegerechte Druckregelventile, welchen keinen Einfluss auf die Sterilität aufweisen, verwendet werden. Daneben können in den Zuführleitungen Temperaturmesseinrichtungen vorgesehen sein, oder auch Messeinrichtungen, welche andere physikalische Parameter wie beispielsweise Flüssigkeitsgehalte bestimmen.

Fig. 5 veranschaulicht eine weitere Ausgestaltung der vorliegenden Erfindung. Bei dieser Ausgestaltung wird die Druckluft zunächst unsteril über den Drehverteiler 24 zugeführt und erst auf dem drehenden Teil nach Einstellung der verschiedenen Druckniveaus steril filtriert bzw. steril behandelt. In diesem Falle sind jedoch mehrere Zuleitungen 20a bis 20d vorgesehen, welche jeweils ein Sterilisationsmedium A vor den einzelnen Filtereinrichtungen 18a bis 18d einführen. Auch hier können noch zweite Zuleitungen 40a bis 40d vorgesehen sein, welche ein zweites steriles Medium zuführen können.

Bevorzugt werden für die einzelnen Zuführleitungen Materialien ausgewählt, welche eine hohe Beständigkeit gegenüber dem verwendeten Sterilisationsmedium wie beispielsweise Wasserstoffperoxid und/ oder Dampf aufweisen.

Damit ist es insgesamt möglich, die Rekontamination steriler Kunststoffvorformlinge während der Umformung zu vermeiden und damit auch eine deutliche Reduzierung der Kosten gegenüber einer Sterilisation der fertig ausgeformten Behältnisse für aseptische Abfüllungen zu erreichen.

Durch die erfindungsgemäße Vorgehensweise können auch temperaturempfindliche Bauteile sterilisiert werden, wobei auch eine Einbindung an eine zentrale Verdampfer- und Sterilluftversorgung insbesondere an Maschinen mit Trockenentkeimungsprozessen mit geringem Aufwand zu verwirklichen ist. Weiterhin wäre es auch möglich, die Zuleitung oder Zuleitungen für das Sterilisationsmedium an bereits bestehenden Anlagen nachträglich zu installieren.

Wie erwähnt, handelt es sich insbesondere bei der erfindungsgemäßen Vorrichtung um eine solche Vorrichtung, welche die Kunststoffvorformlinge unter sterilen Bedingungen zu Kunststoffbehältnissen sterilisieren kann. Damit werden die einzelnen Zuführleitungen nicht nur zum Leiten der Blasluft, sondern auch zum Transportieren eines Sterilisationsmediums verwendet.

### Bezugszeichenliste

- 4a-4e: Druckminderer (Ventile)
- 5a - 5d: Ventileinrichtung
- 6: Blasdüse
- 7a - 7d: Ventileinrichtung
- 8: Reservoir
- 9a-9d: Messeinrichtung
- 10: Behältnis
- 12: Zuführleitung
- 12a-12d: Seitenleitungen, Teilleitungen
- 14a-14d: Ringkanäle
- 14a-14c: Teilkanäle
- 15a-15c: Rückführungskanäle
- 16a-16c: Filtereinheiten
- 18: Filtereinrichtung
- 18a-18d: Filtereinrichtungen
- 20: Zuleitung
- 20a-20e: Zuleitungen
- 22a-22e: Ventile
- 24: Drehverteiler
- 25: Einspeisepunkt
- 26a-26d: Ventil
- 28: Ventil
- 30: Blasstation
- 32: erster Filter
- 34: zweiter Filter
- 38: Luftverbraucher
- 40: zweite Zuleitung
- 40a-40d: Zuleitungen
- 42a-42d: Ventile
- 104a-104e: Ventile
- 112: Hauptkanal (Stand der Technik)
- 112a-112d: Teilkanäle (Stand der Technik)
- 112d: Leitung (Stand der Technik)
- 114a-114d: Ringkanäle (Stand der Technik)
- 124: (in Fig. 1b enthalten, aber nicht im Text)
- 126: Filtereinrichtung (Stand der Technik)
- A: erstes Sterilisationsmedium
- B: zweites Sterilisationsmedium
- P2-P5: Druckstufen

## Patentansprüche

1. Vorrichtung zum Umformen von Kunststoffvorformlingen zu Kunststoffbehältnissen (10), mit einer Transporteinrichtung, welche die Behältnisse entlang eines vorgegebenen Transportpfades transportiert, mit einer Beaufschlagungseinrichtung (6), welche die Behältnisse (10) mit einem fließfähigen Medium beaufschlagt, um diese zu expandieren, mit einem Reservoir (8) zum Aufbewahren des fließfähigen Mediums und mit einer Zuführungsleitung (12), welche das fließfähige Medium von dem Reservoir (8) zu dem Behältnis (10) fördert, wobei eine Ventileinrichtung (4a, 4b, 4c) die Zufuhr des fließfähigen Mediums in die Behältnisse steuert (10), um die Behältnisse zu expandieren, wobei die Vorrichtung eine Vielzahl von Beaufschlagungseinrichtungen aufweist und die Vorrichtung eine Verteileinrichtung (24) aufweist, welche das fließfähige Medium an die einzelnen Beaufschlagungseinrichtungen leitet, wobei die Vorrichtung (1) eine erste Zuleitung (20) aufweist, um der Zuführungsleitung zwischen dem Reservoir (8) und dem zu behandelnden Behältnis (10) ein fließfähiges Sterilisationsmedium zur Sterilisierung der Zuführungsleitung zuzuführen oder in einer Abführleitung für das fließfähige Medium, welche das fließfähige Medium von den Behältnissen (10) abführt, ein fließfähiges Sterilisationsmedium zuzuführen, wobei es sich bei der Vorrichtung um eine Streckblasmaschine handelt, welche auch eine Reckstange aufweist, welche die Behältnisse in ihrer Längsrichtung dehnt.

2. Vorrichtung zum Umformen von Kunststoffvorformlingen zu Kunststoffbehältnissen (10), mit einer Transporteinrichtung, welche die Behältnisse entlang eines vorgegebenen Transportpfades transportiert, mit einer Beaufschlagungseinrichtung (6), welche die Behältnisse (10) mit einem fließfähigen Medium beaufschlagt, um diese zu expandieren, mit einem Reservoir (8) zum Aufbewahren des fließfähigen. Mediums und mit einer Zuführungsleitung (12), welche das fließfähige Medium von dem Reservoir (8) zu dem Behältnis (10) fördert, wobei eine Ventileinrichtung (4a, 4b, 4c) die Zufuhr des fließfähigen Mediums in die Behältnisse steuert (10), um die Behältnisse zu expandieren, wobei die Vorrichtung (1) eine erste Zuleitung (20) aufweist, um der Zuführungsleitung zwischen dem Reservoir (8) und dem zu behandelnden Behältnis (10) ein fließfähiges Sterilisationsmedium zur Sterilisierung der Zuführungsleitung zuzuführen oder in einer Abführleitung für das fließfähige Medium, welche das fließfähige Medium von den Behältnissen (10) abführt, ein fließfähiges Sterilisationsmedium zuzuführen, wobei es sich bei der Vorrichtung um eine Streckblasmaschine handelt, welche auch eine Reckstange aufweist, welche die Behältnisse in ihrer Längsrichtung dehnt, wobei die Vorrichtung (1) eine Steuereinrichtung (16) aufweist, welche die Zuführung des Sterilisationsmediums nur außerhalb eines Arbeitsbetriebs der Vorrichtung (1) in welchem die Behältnisse (10) mit dem fließfähigen Medium beaufschlagt werden, zulässt,

3. Vorrichtung (1) nach einem der vorhergehenden Ansprüche,
**dadurch gekennzeichnet, dass**
das Reservoir (8) stationär angeordnet ist.

4. Vorrichtung (1) nach einem der Ansprüche 1-2,
**dadurch gekennzeichnet, dass**
die Vorrichtung eine Vielzahl von Blasstationen (30) aufweist, in denen Kunststoffvorformlinge zu Kunststoffbehältnissen umformbar sind.

5. Vorrichtung (1) nach wenigstens einem der vorangegangenen Ansprüche 1, 3-4, **dadurch gekennzeichnet, dass**
die Vorrichtung (1) eine Steuereinrichtung (16) aufweist, welche die Zuführung des Sterilisationsmediums nur außerhalb eines Arbeitsbetriebs der Vorrichtung (1) in welchem die Behältnisse (10) mit dem fließfähigen Medium beaufschlagt werden, zulässt.

6. Vorrichtung (1) nach wenigstens einem der vorangegangenen Ansprüche 2-5. **dadurch gekennzeichnet, dass**
die Vorrichtung eine Vielzahl von Beaufschlagungseinrichtungen aufweist und die Vorrichtung (1) eine Verteileinrichtung (24) aufweist, welche das fließfähige Medium an die einzelnen Beaufschlagungseinrichtungen leitet, wobei die Zuleitung (20) vorteilhaft zwischen dem Reservoir (8) und der Verteileinrichtung (24) in die Zuführungsleitung (12) mündet.

7. Vorrichtung (1) nach Anspruch 1,
**dadurch gekennzeichnet, dass**
die Zuleitung (20) zwischen dem Reservoir (8) und der Verteileinrichtung (24) in die Zuführungsleitung (12) mündet.

8. Vorrichtung (1) nach wenigstens einem der vorangegangenen Ansprüche,
**dadurch gekennzeichnet, dass**
die Vorrichtung (1) eine zweite Zuleitung (40) für ein weiteres Sterilisationsmedium aufweist.

9. Vorrichtung (1) nach wenigstens einem der vorangegangenen Ansprüche,
**dadurch gekennzeichnet, dass**
die Zuleitung des Sterilisationsmediums in die Zuführleitung (12) in einem Bereich der Zuführleitung erfolgt, der stromabwärts der Ventileinrichtungen (4a - 4c) gelegen ist.

10. Verfahren zum Betreiben einer Vorrichtung (1) zum Umformen von Kunststoffvorformlingen zu Kunststoffbehältnissen nach einem der Ansprüche 1-2, wobei die Vorrichtung (1) in einem Arbeitsbetrieb mittels einer Vielzahl von Beaufschlagungseinrichtungen Behältnisse (10) mit einem fließfähigen Medium beaufschlagt und dieses fließfähige Medium den Behältnissen über eine Zuführleitung (12) zugeführt wird, wobei der Zuführungsleitung (12) wenigstens zeitweise ein insbesondere gasförmiges Sterilisationsmedium zum Sterilisieren der Zuführungsleitung (12) zugeführt wird.

11. Verfahren nach Anspruch 10,
**dadurch gekennzeichnet, dass**
das Sterilisationsmedium Wasserstoffperoxid enthält.

12. Verfahren nach Anspruch 10,
**dadurch gekennzeichnet, dass**
der Vorrichtung nach dem Sterilisieren ein weiteres steriles Gas zugeführt wird.

13. Verfahren nach Anspruch 10,
**dadurch gekennzeichnet, dass**
der Vorrichtung vor dem Sterilisieren Druckluft zugeführt wird.

## Claims

1. An apparatus for shaping plastics material preforms to form plastics material containers (10), with a conveying device which conveys the containers along a pre-set conveying path, with a stressing device (6) which acts upon the containers (10) with a flowable medium in order to expand them, with a reservoir (8) for storing the flowable medium and with a supply device (12) which delivers the flowable medium from the reservoir (8) to the container (10), wherein a valve device (4a, 4b, 4c) controls the supply of the flowable medium into the containers (10), in order to expand the containers, wherein the apparatus has a plurality of stressing devices and the apparatus has a distributor device (24) which conveys the flowable medium to the individual stressing devices, wherein the apparatus (1) has a first feed line (20) in order to supply a flowable sterilization medium to the supply line between the reservoir (8) and the container (10) to be treated for sterilising the supply line, or for supplying a flowable sterilisation medium in a removal line for the flowable medium, which removes the flowable medium from the containers (10), wherein the apparatus is a stretch blow moulding machine, which also comprises a stretching rod which stretches the containers in their longitudinal direction.

2. An apparatus for shaping plastics material preforms to form plastics material containers (10), with a conveying device which conveys the containers along a pre-set conveying path, with a stressing device (6) which acts upon the containers (10) with a flowable medium in order to expand them, with a reservoir (8) for storing the flowable medium and with a supply device (12) which delivers the flowable medium from the reservoir (8) to the container (10), wherein a valve device (4a, 4b, 4c) controls the supply of the flowable medium into the containers (10), in order to expand the containers, wherein the apparatus (1) has a first feed line (20) in order to supply a flowable sterilization medium to the supply line between the reservoir (8) and the container (10) to be treated for sterilising the supply line, or for supplying a flowable sterilisation medium in a removal line for the flowable medium, which removes the flowable medium from the containers (10), wherein the apparatus is a stretch blow moulding machine, which also comprises a stretching rod which stretches the containers in their longitudinal direction, wherein the apparatus (1) has a control device (16) which allows the sterilization medium to be supplied only outside a working operation of the apparatus (1), during which the containers (10) are acted upon with the flowable medium.

3. An apparatus (1) according to one of the preceding claims,
**characterized in that**
the reservoir (8) is arranged in a stationary manner.

4. An apparatus (1) according to one of claims 1-2,
**characterized in that**
the apparatus has a plurality of blowing stations (30) in which plastics material preforms are capable of being shaped to form plastics material containers.

5. An apparatus (1) according to at least one of the preceding claims 1, 3-4,
**characterized in that**
the apparatus (1) has a control device (16) which allows the sterilization medium to be supplied only outside a working operation of the apparatus (1), during which the containers (10) are acted upon with the flowable medium.

6. An apparatus (1) according to at least one of the preceding claims 2-5, **characterized in that**
the apparatus has a plurality of stressing devices and the apparatus (1) has a distributor device (24) which conveys the flowable medium to the individual stressing devices, wherein the feed line (20) advantageously opens into the supply line (12) between the reservoir (8) and the distributor device (24).

7. An apparatus (1) according to claim 1,
**characterized in that**
the feed line (20) between the reservoir (8) and the distributor device (24) flows into the supply line (12).

8. An apparatus (1) according to at least one of the preceding claims, **characterized in that**
the apparatus (1) has a second feed line (40) for a further sterilization medium.

9. An apparatus (1) according to at least one of the preceding claims, **characterized in that**
the feed line of the sterilization medium into the supply line (12) takes place in a region of the supply line which is situated downstream of the valve devices (4a to 4c).

10. A method of operating an apparatus (1) for shaping plastics material preforms to form plastics material containers according to one of claims 1-2, wherein in a working operation the apparatus (1) acts upon containers (10) with a flowable medium by means of a plurality of stressing devices and this flowable medium is supplied to the containers by way of a supply line (12),
wherein a sterilization medium, in particular a gaseous sterilization medium, is supplied to the supply line (12) at least for a time in order to sterilize the supply line (12).

11. A method according to claim 10,
**characterized in that**
the sterilization medium contains hydrogen peroxide.

12. A method according to claim 10,
**characterized in that**
a further sterile gas is supplied to the apparatus after the sterilization.

13. A method according to claim 10,
**characterized in that**
compressed air is supplied to the apparatus before the sterilization.

## Revendications

1. Dispositif servant à façonner des préformes en plastique en des récipients en plastique (10), avec un système de transport, lequel transporte les contenants le long d'une voie de transport spécifiée, avec un système de sollicitation (6), lequel soumet les récipients (10) à l'action d'un milieu pouvant s'écouler pour expanser ceux-ci, avec un réservoir (8) servant à conserver le milieu pouvant s'écouler et avec un conduit d'amenée (12), lequel convoie le milieu pouvant s'écouler depuis le réservoir (8) vers le récipient (10), dans lequel un système de soupape (4a, 4b, 4c) commande l'amenée du milieu pouvant s'écouler dans les récipients (10) pour expanser les récipients, dans lequel le dispositif présente une pluralité de systèmes de sollicitation et le dispositif présente un système de distribution (24), lequel achemine le milieu pouvant s'écouler aux divers systèmes de sollicitation,
dans lequel le dispositif (1) présente un premier conduit d'arrivée (20) pour amener un milieu de stérilisation pouvant s'écouler au conduit d'amenée entre le réservoir (8) et le récipient (10) à traiter ou dans un conduit d'évacuation pour le milieu pouvant s'écouler, lequel évacue le milieu pouvant s'écouler des récipients (10), dans lequel le dispositif est une machine d'étirage-soufflage, laquelle présente également une tige d'étirage, laquelle allonge les récipients dans leur sens longitudinal.

2. Dispositif servant à façonner des préformes en plastique en des récipients en plastique (10), avec un système de transport, lequel transporte les contenants le long d'une voie de transport spécifiée, avec un système de sollicitation (6), lequel soumet les récipients (10) à l'action d'un milieu pouvant s'écouler pour expanser ceux-ci, avec un réservoir (8) servant à conserver le milieu pouvant s'écouler et avec un conduit d'amenée (12), lequel convoie le milieu pouvant s'écouler depuis le réservoir (8) vers le récipient (10), dans lequel un système de soupape (4a, 4b, 4c) commande l'amenée du milieu pouvant s'écouler dans les récipients (10) pour expanser les récipients, dans lequel le dispositif (1) présente un premier conduit d'arrivée (20) pour amener un milieu de stérilisation pouvant s'écouler au conduit d'amenée entre le réservoir (8) et le récipient (10) à traiter ou dans un conduit d'évacuation pour le milieu pouvant s'écouler, lequel évacue le milieu pouvant s'écouler des récipients (10), dans lequel le dispositif est une machine d'étirage-soufflage, laquelle présente également une tige d'étirage, laquelle allonge les récipients dans leur sens longitudinal, dans lequel le dispositif (1) présente un système de commande (16), lequel autorise l'amenée du milieu de stérilisation seulement en dehors d'un mode de fonctionnement du dispositif (1) dans lequel les récipients (10) sont soumis à l'action du milieu pouvant s'écouler.

3. Dispositif (1) selon l'une quelconque des revendications précédentes, **caractérisé en ce que**
le réservoir (8) est disposé de manière stationnaire.

4. Dispositif (1) selon l'une quelconque des revendications 1-2,
**caractérisé en ce que**
le dispositif présente une pluralité de postes de soufflage (30), dans lesquels des préformes en plastique peuvent être façonnées en des récipients en plastique.

5. Dispositif (1) selon au moins l'une quelconque des revendications 1, 3-4, **caractérisé en ce que**
le dispositif (1) présente un système de commande (16), lequel autorise l'amenée du milieu de stérilisation seulement en dehors d'un mode de fonctionnement du dispositif (1) dans lequel les récipients (10) sont soumis à l'action du milieu pouvant s'écouler.

6. Dispositif (1) selon au moins l'une quelconque des revendications 2-5, **caractérisé en ce que**
le dispositif présente une pluralité de systèmes de sollicitation et le dispositif (1) présente un système de distribution (24), lequel achemine le milieu pouvant s'écouler aux divers systèmes de sollicitation, dans lequel le conduit d'arrivée (20) débouche de manière avantageuse dans le conduit d'amenée (12) entre le réservoir (8) et le système de distribution (24).

7. Dispositif (1) selon la revendication 1,
**caractérisé en ce que**
le conduit d'arrivée (20) entre le réservoir (8) et le système de distribution (24) débouche dans le conduit d'amenée (12).

8. Dispositif (1) selon au moins l'une quelconque des revendications précédentes,
**caractérisé en ce que**
le dispositif (1) présente un deuxième conduit d'arrivée (40) pour un autre milieu de stérilisation.

9. Dispositif (1) selon au moins l'une quelconque des revendications précédentes,
**caractérisé en ce que**
l'arrivée du milieu de stérilisation dans le conduit d'amenée (12) est effectuée dans une zone du conduit d'amenée, qui est placée en aval des systèmes de soupape (4a - 4c).

10. Procédé servant à faire fonctionner un dispositif (1) servant à façonner des préformes en plastique en des récipients en plastique selon l'une des revendications 1-2, dans lequel le dispositif (1) soumet, dans un mode de fonctionnement, au moyen d'une pluralité de systèmes de sollicitation, des récipients (10) à l'action d'un milieu pouvant s'écouler et ce milieu pouvant s'écouler est amené aux récipients par l'intermédiaire d'un conduit d'amenée (12),
dans lequel un milieu de stérilisation en particulier sous forme gazeuse servant à stériliser le conduit d'amenée (12) est amené au moins par intermittence au conduit d'amenée (12).

11. Procédé selon la revendication 10,
**caractérisé en ce que**
le milieu de stérilisation contient du peroxyde d'hydrogène.

12. Procédé selon la revendication 10,
**caractérisé en ce que**
un autre gaz stérile est amené au dispositif après la stérilisation.

13. Procédé selon la revendication 10,
**caractérisé en ce que**
de l'air comprimé est amené au dispositif avant la stérilisation.
